# EUROPEAN PATENT SPECIFICATION

(11) **EP 4 343 734 B1**
(45) Date of publication and mention of the grant of the patent: **01.10.2025**
(21) Application number: 23189936.0
(22) Date of filing: 07.08.2023
(51) Int. Cl.: G08G 5/22, G08G 5/53, G08G 5/55, G08G 5/72, G08G 5/59

(54) **IDENTIFYING AN OBJECT IN AN AREA OF INTEREST**
IDENTIFIZIERUNG EINES OBJEKTS IN EINEM BEREICH VON INTERESSE
IDENTIFICATION D'UN OBJET DANS UNE ZONE D'INTÉRÊT

(30) Priority: 09.09.2022 US 202217931006
(43) Date of publication of application: 27.03.2024
(73) Proprietor: The Boeing Company, Arlington, VA 22202 (US)
(72) Inventor: LEBAK, STEPHEN MICHAEL, Arlington, 22202 (US)
(74) Representative: Sandri, Sandro

(56) References cited:
- JP-A- H11 144 041
- US-A1- 2014 018 979
- US-A1- 2015 254 988
- US-A1- 2022 269 290

## Description

### BACKGROUND INFORMATION

### 1. Field:

The present disclosure relates generally to systems and methods for determining whether an object is inside of a defined area of interest, and, more particularly, to determining whether a physical object is inside of geographic or other area of interest, such as whether an aircraft is operating inside an airspace area of interest.

### 2. Background:

Special use airspace is an example of an airspace area of interest. Special use airspace is an area designated for operations of a nature such that limitations may be imposed on aircraft not participating in those operations. Often these operations are of a military nature. Examples of special use airspace includes: restricted airspace, prohibited airspace, military operations areas, warning areas, alert areas, temporary flight restriction, national security areas, and controlled firing areas.

Another example of an airspace area of interest is a no-fly zone. A no-fly zone is a territory or area established by a military or other power over which certain aircraft are not permitted to fly. A no-fly zone also may be known as a no-flight zone, or air exclusion zone.

An aircraft area of interest may be identified by an area on the surface of the earth over which the operation of an aircraft may be restricted, forbidden, or hazardous. Aircraft operators and entities responsible for monitoring or controlling aircraft operations in an airspace area of interest are interested in the accurate and timely determination of whether or not an aircraft is within an airspace area of interest.

Therefore, there may be a need for a method and apparatus that take into account at least some of the issues discussed above, as well as other possible issues.

Document US 2015/0254988 A1, with its abstract, describes systems, methods, and devices for providing flight response to flight-restricted regions. The location of an unmanned aerial vehicle (UAV) is compared with a location of a flight-restricted region. If needed a flight-response measure is taken by the UAV to prevent the UAV from flying in a no-fly zone. Different flight-response measures may be taken based on the distance between the UAV and the flight-restricted region and the rules of a jurisdiction within which the UAV falls.

### SUMMARY

The present disclosure provides a computer-implemented method of identifying an object in an area of interest having the steps defined at claim 1. The dependent claims outline advantageous ways of carrying out the method.

The present disclosure also provides an object locating system for identifying an object in an area of interest having the features described at claim 10. The dependent claims outline advantageous forms of embodiment of the system.

Features and functions can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of aircraft operating in an area of aircraft operations including an airspace area of interest in accordance with illustrative embodiments;
**Figure 2** depicts a block diagram of an object locating environment in accordance with illustrative embodiments;
**Figure 3** depicts a block diagram of an object locating system in accordance with illustrative embodiments;
**Figure 4** is an illustration of a user interface for defining an airspace area of interest in accordance with illustrative embodiments;
**Figure 5** is an illustration of a user interface including indicators for indicating whether aircraft are inside or outside of an airspace area of interest in accordance with illustrative embodiments;
**Figure 6** is an illustration of a user interface including warning indicators for aircraft that are inside an airspace area of interest in accordance with illustrative embodiments;
**Figure 7** is an illustration of an area of interest and a binary search tree for the area of interest in accordance with illustrative embodiments;
**Figure 8** is an illustration of an example of determining the location of an object inside an area of interest in accordance with illustrative embodiments;
**Figure 9** is an illustration of an example of determining the location of an object outside of an area of interest in accordance with illustrative embodiments;
**Figure 10** is a flowchart depicting a method of determining whether an object is in an area of interest in accordance with illustrative embodiments;
**Figure 11** is a flowchart depicting in more detail a method of determining whether an object is in an area of interest in accordance with illustrative embodiments;
**Figure 12** is a flowchart depicting a method of storing vertex angles for an area of interest in a sequence of binary search trees in accordance with illustrative embodiments;
**Figure 13** is a flowchart depicting a method of using an object angle for an object and vertex angles for an area of interest to determine whether the object is in the area of interest in accordance with illustrative embodiments; and
**Figure 14** is an illustration of a block diagram of a data processing system in accordance with illustrative embodiments.

### DETAILED DESCRIPTION

The illustrative examples recognize and take into account different considerations. For example, the illustrative examples recognize and take into account that it is desirable to determine accurately and quickly whether an object is inside or outside of an area of interest. For example, it is desirable to be able to identify aircraft that are operating inside an airspace area of interest, such as an area of restricted airspace.

The illustrative embodiments also recognize and take into account that various mathematical solutions for determining whether a point is located within a polygon have been developed. One such solution counts the number of intersections between the sides of the polygon and a line extending from the point. Another solution calculates a winding number for the point. Such solutions may be applied to the problem of determining whether aircraft are inside an airspace area of interest and similar problems. However, current systems for solving this this problem may have various limitation.

For example, current systems may not identify aircraft inside an airspace area of interest in a timely manner. In particular, the computing time required by current systems to identify aircraft inside an airspace area of interest may be undesirable when there are a relatively large number of aircraft to be considered or when the shape of the airspace area of interest is irregular. For example, the processing time required by current systems to identify aircraft in an airspace area of interest may be undesirable when the airspace area of interest is defined by a relatively large number of edges.

The illustrative embodiments provide a method and system for identifying objects in an area of interest both accurately and quickly. In accordance with the illustrative embodiments, the vertex points defining the boundary of an area of interest are converted to vertex angles in a polar coordinate system that is defined with reference to the area of interest. The locations of objects are converted to object angles in the same polar coordinate system. A number of intersections between the sides of the area of interest and a line extending from the location of an object are more quickly identified by using the vertex angles of the area of interest and the object angle of the object.

Processing speed of illustrative embodiments may be further improved by storing the vertex angles for the area of interest in a more easily searchable data structure. In accordance with an illustrative embodiment, the vertex angles for an area of interest may be stored in a sequence of binary search trees.

Illustrative embodiments may improve the speed of identifying objects in an area of interest when the number of objects is relatively large. Furthermore, illustrative embodiments may improve the speed of identifying objects in an area of interest even for irregularly shaped areas of interest defined by a relatively large number of edges.

Processing times for current systems and methods for identifying whether objects are inside of an area of interest typically may be on the order of N, where N is the number of vertex points defining the area of interest. Processing times for systems and methods for identifying whether objects are inside of an area of interest in accordance with the illustrative embodiments described herein may be improved to as low as on the order of log(N).

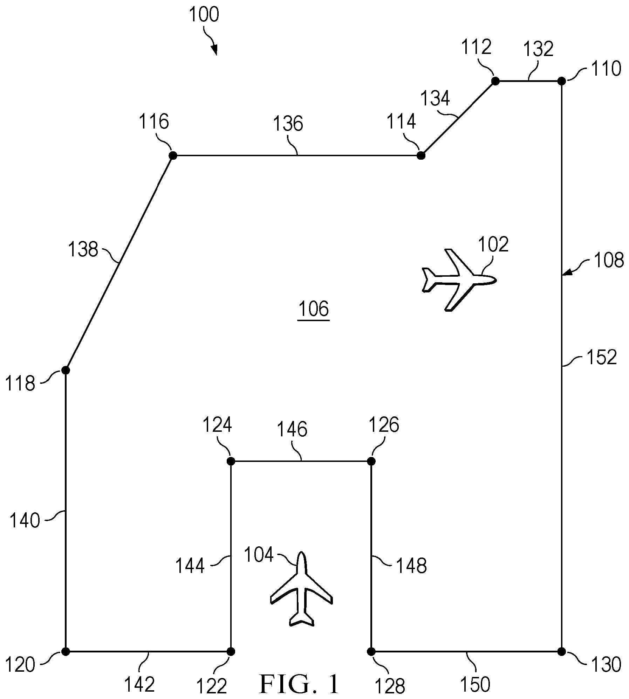

With reference now to the figures, **Figure 1** is an illustration of aircraft operating in an area of aircraft operations including an airspace area of interest in accordance with illustrative embodiments. Area of aircraft operations **100** may include any appropriate area in which aircraft may operate. In this example, aircraft **102** and aircraft **104** are operating in area of aircraft operations **100.**

Airspace area of interest **106** is an area defined within area of aircraft operations **100.** Airspace area of interest **106** includes the area within boundary **108.** Boundary **108** of airspace area of interest **106** may be of any appropriate size and shape. In this example, boundary **108** of airspace area of interest **106** is defined by vertex points **110, 112, 114, 116, 118, 120, 122, 124, 126, 128,** and **130** and line segments **132, 134, 136, 138, 140, 142, 144, 146, 148,** and **150** extending between the vertex points.

The vertex points at each end of a line segment in boundary **108** are adjacent vertex points. For example, vertex points **110** and **112** are adjacent vertex points at the ends of line segment **132** in boundary **108.**

As applied to the example illustrated in **Figure 1****,** illustrative embodiments as described herein may identify aircraft **102** as operating inside airspace area of interest **106** and aircraft **104** as operating outside of airspace area of interest **106** both accurately and in a timely manner.

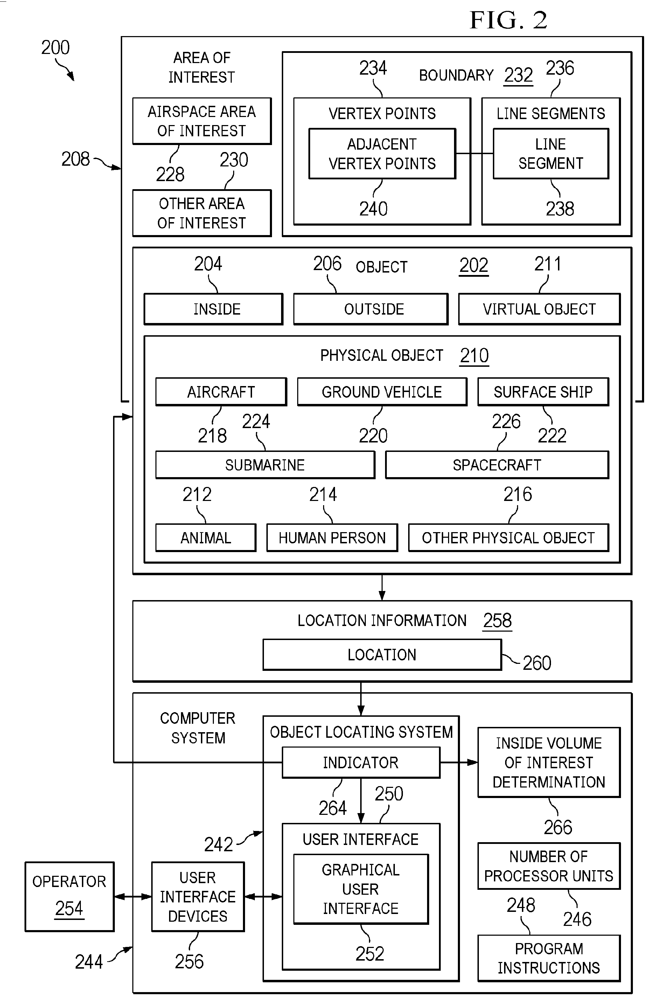

Turning to **Figure 2****,** a block diagram of an object locating environment is depicted in accordance with illustrative embodiments. Object locating environment **200** may include any appropriate environment in which object **202** may be located inside **204** or outside **206** of area of interest **208.**

Object **202** may include any appropriate type of physical object **210** or virtual object **211.** Physical object **210** may include one or more physical objects and may include various different types of physical objects in any appropriate combination. For example, without limitation, physical object **210** may include one or more of vehicles such as one or more of aircraft **218,** ground vehicle **220,** surface ship **222,** submarine **224,** or spacecraft **226.** Alternatively, or in addition, physical object **210** may include one or more of animal **212,** human person **214,** or other physical object **216.**

Virtual object **211** may include any appropriate virtual implementation of any appropriate physical object in a virtual environment. Virtual object **211** also may be referred to as a digital object.

Area of interest **208** may include any appropriate area in which any appropriate object **202** may be located. For example, area of interest **208** for physical object **210** may include airspace area of interest **228** or other area of interest **230.** For example, without limitation, aircraft **218** may be located inside **204** or outside **206** of airspace area of interest **228.** Airspace area of interest **106** in **Figure 1** is an example of airspace area of interest **228.**

Area of interest **208** for virtual object **211** may include any appropriate area in a virtual environment in which virtual object **211** may be located. For example, without limitation, area of interest for virtual object **211** may be an area within a virtual game or simulation environment.

Area of interest **208** is an area enclosed within boundary **232.** In accordance with the illustrative embodiments, boundary **232** is defined by vertex points **234** and line segments **236** extending between vertex points **234.** Vertex points **234** at the end of each line segment **238** in line segments **236** are adjacent vertex points **240.**

In accordance with an illustrative embodiment, object locating system **242** is configured to determine whether object **202** is located inside **204** or outside **206** of area of interest **208.** Object locating system **242** may be implemented in hardware or in hardware in combination with software in computer system **244.**

Computer system **244** is a physical hardware system and includes one or more data processing systems. When more than one data processing system is present in computer system **244,** those data processing systems are in communication with each other using a communications medium. The communications medium can be a network. The data processing systems can be selected from at least one of a computer, a server computer, a tablet computer, or some other suitable data processing system.

As depicted, computer system **244** includes a number of processor units **246** that are capable of executing program instructions **248** implementing processes in the illustrative examples. As used herein a processor unit in the number of processor units **246** is a hardware device and is comprised of hardware circuits such as those on an integrated circuit that respond and process instructions and program code that operate a computer. When a number of processor units **246** execute program instructions **248** for a process, the number of processor units **246** is one or more processor units that can be on the same computer or on different computers. In other words, the process can be distributed between processor units on the same or different computers in a computer system. Further, the number of processor units **246** can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

Object locating system **242** may include user interface **250.** For example, user interface **250** may be graphical user interface **252.** In accordance with an illustrative embodiment, operator **254** may interact with user interface **250** via appropriate user interface devices **256** to define area of interest **208.**

Object locating system **242** is configured to receive location information **258** for object **202.** Location information **258** may include any appropriate information that identifies location **260** of object **202.**

Object locating system **242** is configured to use location information **258** to determine whether object **202** is inside **204** or outside **206** of area of interest **208** as described in more detail herein. Object locating system **242** may generate any appropriate indicator **264** to indicate whether object **202** is inside **204** area of interest **208.** For example, indicator **264** may be presented to operator **254** in an appropriate manner via user interface **250.** Indicator **264** may be provided as a message in appropriate form to physical object **202.** As another example, indicator **264** may be provided as input to inside volume of interest determination **266.**

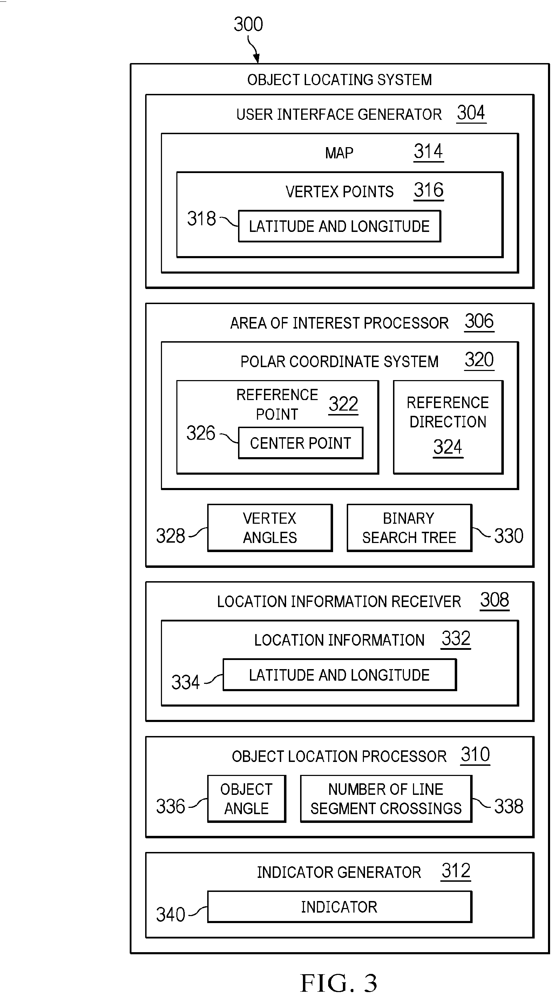

Turning to **Figure 3****,** a block diagram of an object locating system is depicted in accordance with illustrative embodiments. Object locating system **300** is an example of one implementation of object locating system **242** in **Figure 2****.** Object locating system **300** may include user interface generator **304,** area of interest processor **306,** location information receiver **308,** object location processor **310,** and indicator generator **312.**

User interface generator **304** may be configured to generate a user interface, such as user interface **250** in **Figure 2****,** on which map **314** is displayed. Map **314** may be user selectable. A user may define an area of interest by indicating vertex points **316** for the area of interest on map **314.** Latitude and longitude **318** may be generated automatically for each of vertex points **316** indicated by the user.

Area of interest processor **306** is configured to define polar coordinate system **320** relative to a defined area of interest by defining reference point **322** and reference direction **324** in the area of interest. For example, without limitation, reference point **322** may be center point **326** at or near a center of the area of interest.

Area of interest processor **306** converts the vertex points **316** to polar coordinate system **320,** including determining vertex angles **328** for each of vertex points **316.** Vertex angles **328** may then be stored in binary search tree **330.**

Location information receiver **308** is configured to receive location information **332** identifying the location of an object. For example, without limitation, location information **332** may identify the location of the object by latitude and longitude **334.**

Object location processor **310** is configured to convert the location of the object to polar coordinate system **320,** including determining object angle **336** for the object. Object angle **336** and vertex angles **328** stored in binary search tree **330** then may be used to identify number of line segment crossings **338.**

Indicator generator **312** is configured to generate indicator **340** to indicate whether the object is inside the area of interest based on number of line segment crossings **338.**

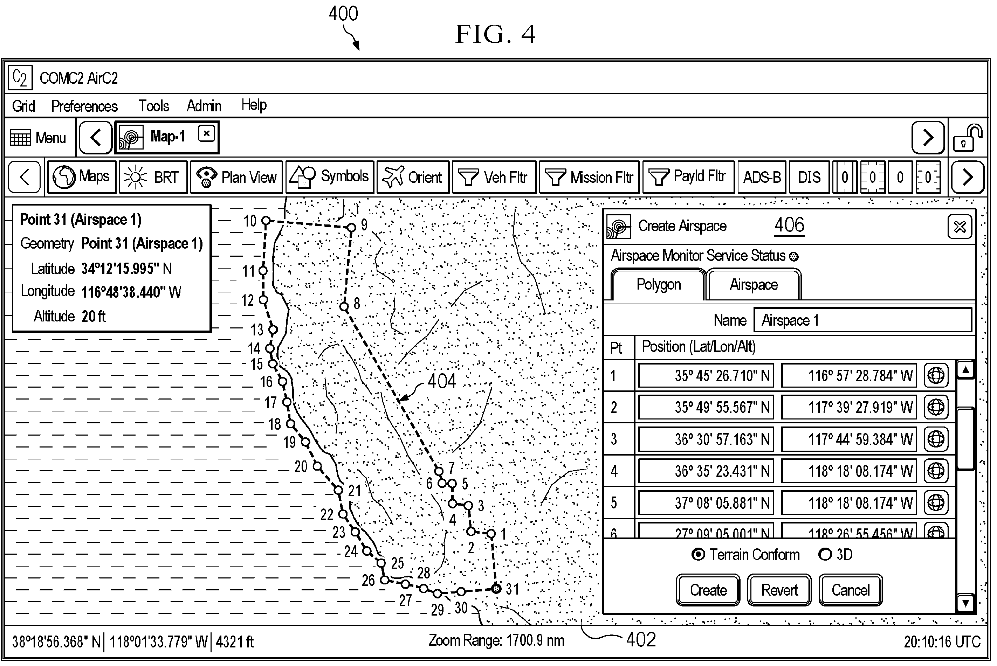

Turning to **Figure 4****,** an illustration of a user interface for defining an airspace area of interest is depicted in accordance with illustrative embodiments. User interface **400** is an example of one implementation of user interface **250** in **Figure 2****.**

User interface 400 includes a displayed background map **402.** Map **402** may be user selectable. A user defines area of interest **404** by selecting vertex points for the area of interest on map **404.** The latitude and longitude coordinates of the selected vertex points may be displayed in an appropriate format in window **406** on user interface **400** or in another appropriate manner.

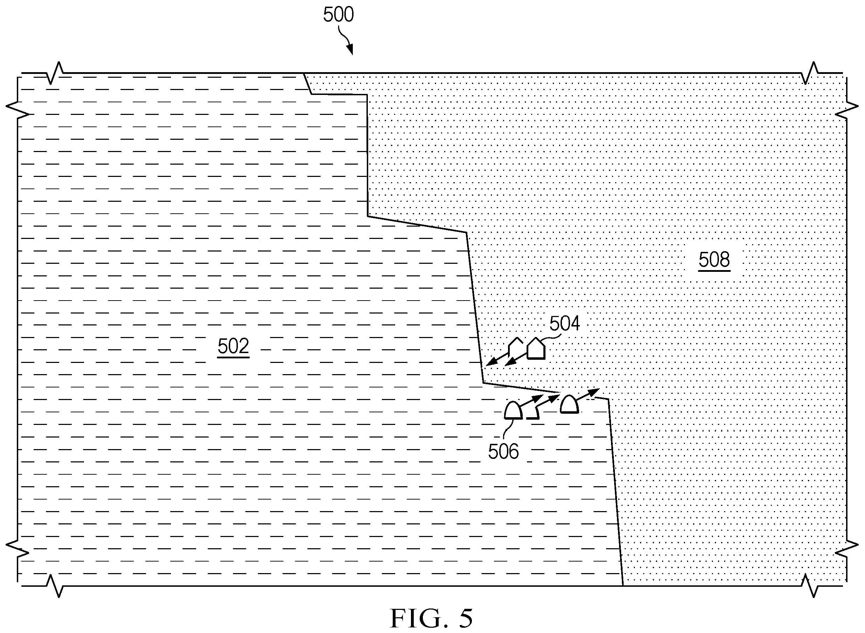

Turning to **Figure 5****,** an illustration of a user interface including indicators for indicating whether aircraft are inside or outside of an airspace area of interest is depicted in accordance with illustrative embodiments. User interface 500 is a close-up view of a portion of map **402 in** **Figure 4****.**

User interface **500** shows area **502** inside of an area of interest and area **508** outside of an area of interest. Indicators **506** identify aircraft inside of the area of interest. Indicators **504** identify aircraft outside of the area of interest.

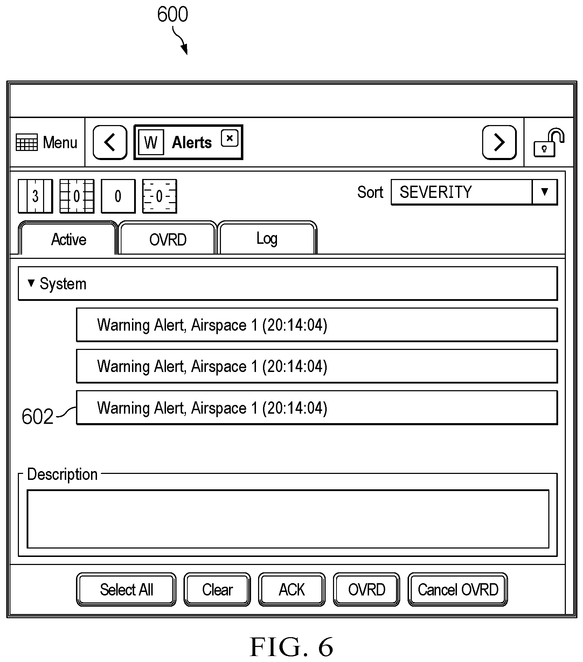

Turning now to **Figure 6****,** an illustration of a user interface including warning indicators for aircraft that are inside an airspace area of interest is depicted in accordance with illustrative embodiments. User interface **600** is an example of another implementation of user interface **250** in **Figure 2****.** In user interface **600,** indicators **602** are warning indicators for aircraft that are inside an airspace area of interest.

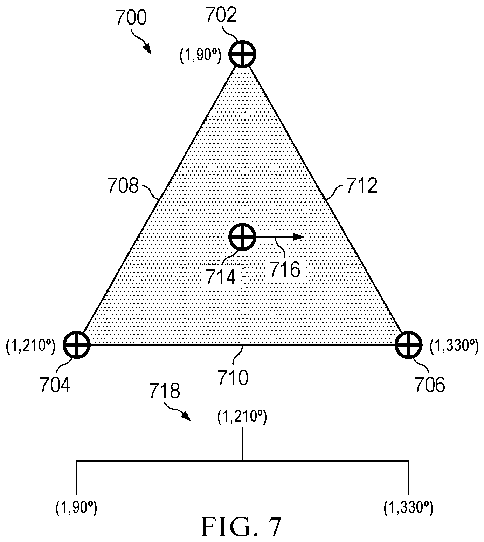

Turning to **Figure 7****,** an illustration of an area of interest and a binary search tree for the area of interest is depicted in accordance with illustrative embodiments. Area of interest **700** is an example of area of interest **208** in **Figure 2****.**

In this example, area of interest **700** is defined by vertex points **702, 704,** and **706** and line segments **708, 710,** and **712.** Reference point **714** and reference angle **716** define a polar coordinate system for area of interest **700.**

The coordinates of vertex points **702, 704,** and **706** in the polar coordinate system are shown in **Figure 7****.** These coordinates include a distance of the vertex point from reference point **714** and a vertex angle for the vertex point. In accordance with an illustrative embodiment, these coordinates are stored in binary search tree **718.**

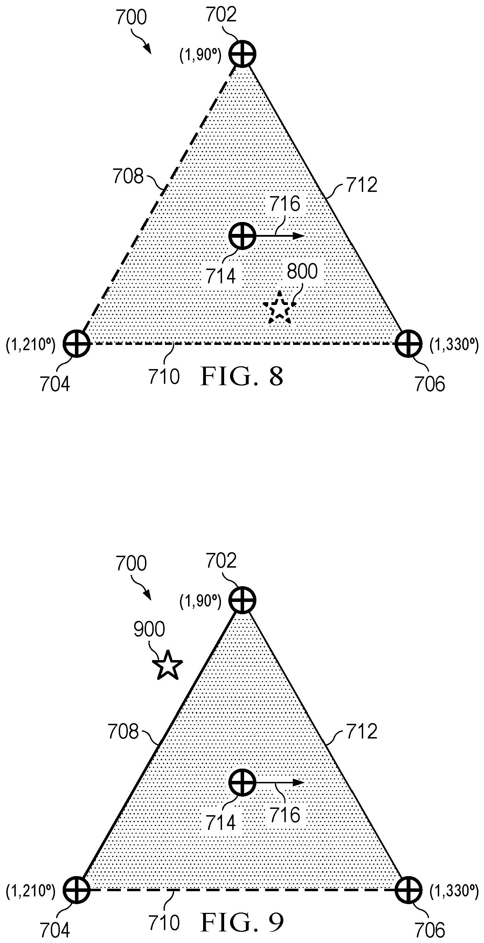

Turning to **Figure 8****,** an illustration of an example of determining the location of an object inside an area of interest is depicted in accordance with illustrative embodiments. In this example, star symbol **800** indicates the location of the object inside of area of interest **700.**

By searching binary search tree **718,** line segment **710** is identified as a possible crossing line segment. Reference point **714** and object location **800** are determined to be on the same side of line segment **710.** Therefore, line segment **710** is confirmed as a line crossing.

Turning to **Figure 9****,** an illustration of an example of determining the location of an object outside of an area of interest is depicted in accordance with illustrative embodiments. In this example, star symbol **900** indicates the location of an object outside of area of interest **700.**

By searching binary search tree **718,** line segment **708** is identified as a possible crossing line segment. In this case, reference point **714** and object location **900** are determined not to be on the same side of line segment **708.** Therefore, line segment **708** is determined not to be a line crossing.

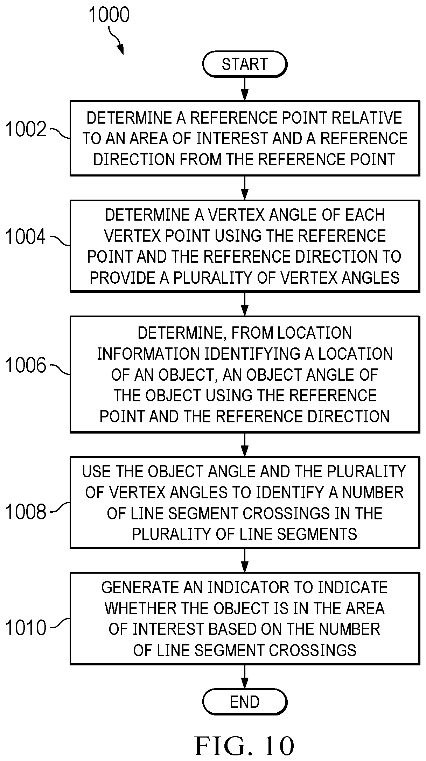

Turning to **Figure 10****,** a flowchart depicting a method of determining whether an object is in an area of interest is depicted in accordance with illustrative embodiments. Method **1000** may be implemented in object locating system **300** in **Figure 3****.**

Method **1000** may begin with determining a reference point relative to the area of interest and a reference direction from the reference point (step **1002).** Step **1002** defines a polar coordinate system with respect to the area of interest. A vertex angle of each vertex point is determined to provide a plurality of vertex angles (step **1004).** The vertex angle of a vertex point is the angle between the reference direction and a line extending from the reference point to the vertex point.

An object angle of an object then may be determined from location information identifying a location of the object (step **1006).** The object angle of the object is the angle between the reference direction and a line extending from the reference point to the object location.

The object angle and the plurality of vertex angles then may be used to identify a number of line segment crossings in the plurality of line segments (step **1008).** An indicator then may be generated to indicate whether the object is in the area of interest based on the number of line segment crossings (step **1010),** with the method terminating thereafter.

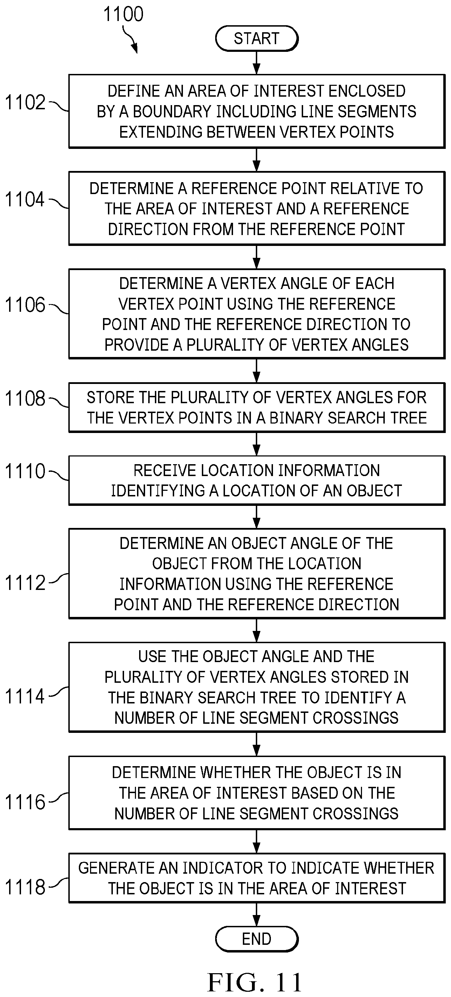

Turning now to **Figure 11****,** a flowchart depicting in more detail a method of determining whether an object is in an area of interest is depicted in accordance with illustrative embodiments. Method **1100** may be implemented in object locating system **300** in **Figure 3****.**

Method **1100** begins with defining an area of interest enclosed by a boundary including line segments extending between vertex points (step **1102).** A reference point and a reference direction from the reference point are determined relative to the area of interest (step **1104).** Step **1104** defines a polar coordinate system with respect to the area of interest. A vertex angle of each vertex point is then determined in the polar coordinate system to provide a plurality of vertex angles (step **1106).** The vertex angle of each vertex point is the angle between the reference direction and a line extending from the reference point to the vertex point. The plurality of vertex angles for the vertex points are stored in a binary search tree (step **1108).**

Location information identifying the location of an object is received (step **1110).** An object angle of the object is determined in the polar coordinate system from the location information (step **1112).** The object angle of the object is the angle between the reference direction and a line extending from the reference point to the location of the object.

The object angle and the plurality of vertex angles stored in the binary search tree are used to identify a number of line segment crossings (step **1114).** It is determined whether the object is inside the area of interest based on the number of line segment crossings identified (step **1116).** An indicator is then generated to indicate whether the object is inside the area of interest (step **1118),** with the method terminating thereafter.

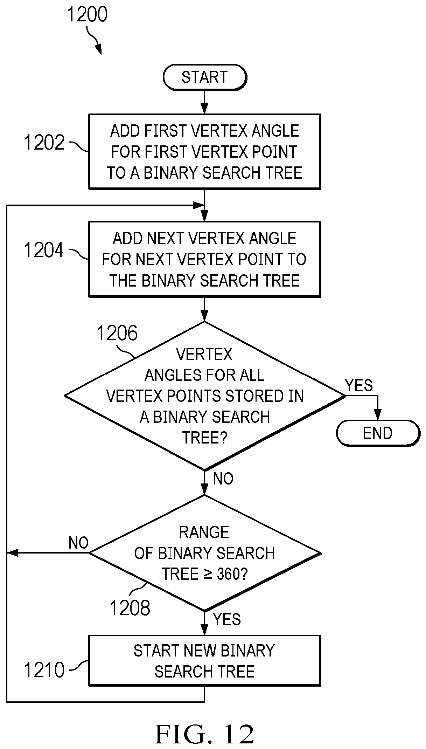

Turning to **Figure 12****,** a flowchart depicting a method of storing vertex angles for an area of interest in a sequence of binary search trees is depicted in accordance with illustrative embodiments. Method **1200** is an example of one possible implementation of step **1108** in method **1100** of **Figure 11****.**

Method **1200** begins by adding a first vertex angle for a first vertex point to a binary search tree (step **1202).** The next vertex angle for the next vertex point along the boundary of the area of interest is then added to the binary search tree (step **1204).** It is then determined whether all of the vertex angles for all of the vertex points defining the area of interest have been stored in a binary search tree (step **1206).** The method terminates in response to a determination at step **1206** that all of the vertex angles have been stored in a binary search tree.

In response to a determination at step **1206** that all of the vertex angles have not been stored in a binary search tree, it is determined whether the range of the binary search tree to which vertex angles are being added is greater than or equal to 360 degrees (step **1208).** In response to a determination at step **1208** that the range of the binary search tree to which vertex angles are being added is not greater than or equal to 360 degrees, the method returns to step **1204** and the next vertex angle is added to the binary search tree. In response to a determination at step **1208** that the range of the binary search tree to which vertex angles are being added is greater than or equal to 360 degrees, a new binary search tree is started (step **1210),** and the method returns to step **1204** with the next vertex angle being added to the new binary search tree.

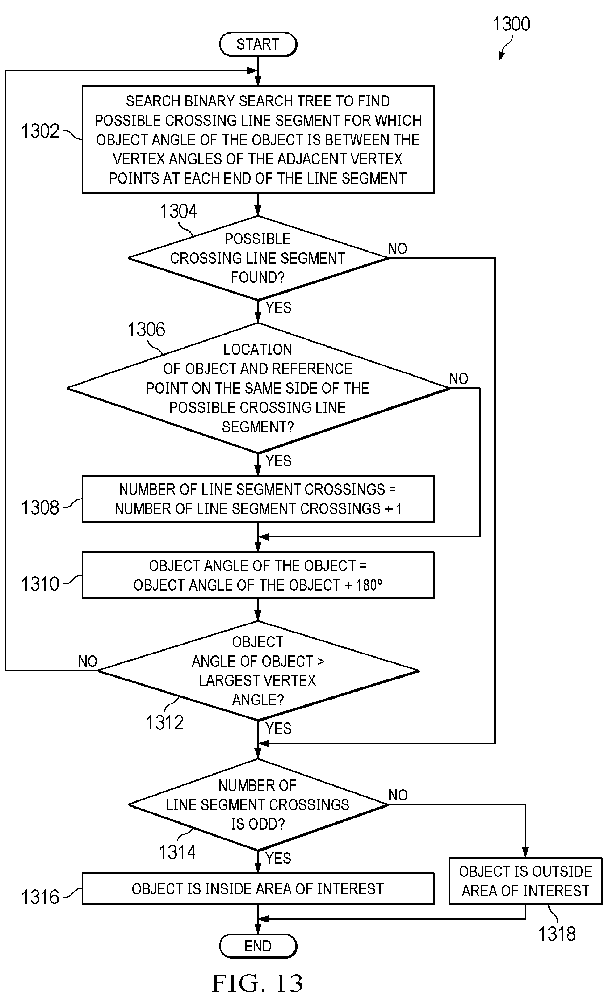

Turning to **Figure 13****,** a flowchart depicting a method of using an object angle for an object and vertex angles for an area of interest to determine whether the object is in the area of interest is depicted in accordance with illustrative embodiments. Method **1300** is an example of one possible implementation of steps **1114** and **1116** in method **1100** of **Figure 11****.** Method **1300** begins with the number of line segment crossings identified set to zero.

Method **1300** begins with searching a binary search tree to find a possible crossing line segment (step **1302).** A possible crossing line segment is a line segment of the boundary of an area of interest for which the object angle of the object is between the vertex angles of the adjacent vertex points at each end of the line segment. It is determined whether a possible crossing line segment is found in the search of the binary search tree of step **1302** (step **1304).**

In response to a determination at step **1304** that a possible crossing line segment is found, it is determined whether the location of the object and the reference point are on the same side of the possible crossing line segment (step **1306).** In response to a determination at step **1306** that the location of the object and the reference point are on the same side of the possible crossing line segment, the number of line segment crossings identified is incremented (step **1308).** In response to a determination at step **1306** that the location of the object and the reference point are not on the same side of the possible crossing line segment, step **1308** is skipped, and the number of line segment crossings identified is not increased.

The object angle of the object is then increased by 180 degrees (step **1310).** It is then determined whether the increased object angle is greater than the largest vertex angle for the area of interest (step **1312).** In response to a determination at step **1312** that the increased object angle is not greater than the largest vertex angle for the area of interest, the method returns to step **1302,** and the binary search tree is searched to find a possible crossing line segment using the increased object angle.

In response to a determination at step **1304** that a possible crossing line segment is not found in the search of the binary search tree or a determination at step **1312** that the increased object angle is greater than the largest vertex angle for the area of interest, it is determined whether the number of line segment crossings identified is odd (step **1314).** In response to a determination at step **1314** that the number of line segment crossings identified is odd, it is determined that the object is inside of the area of interest (step **1316),** with the method terminating thereafter. In response to a determination at step **1314** that the number of line segment crossings identified is not odd, it is determined that the object is not inside of the area of interest (step **1318),** with the method terminating thereafter.

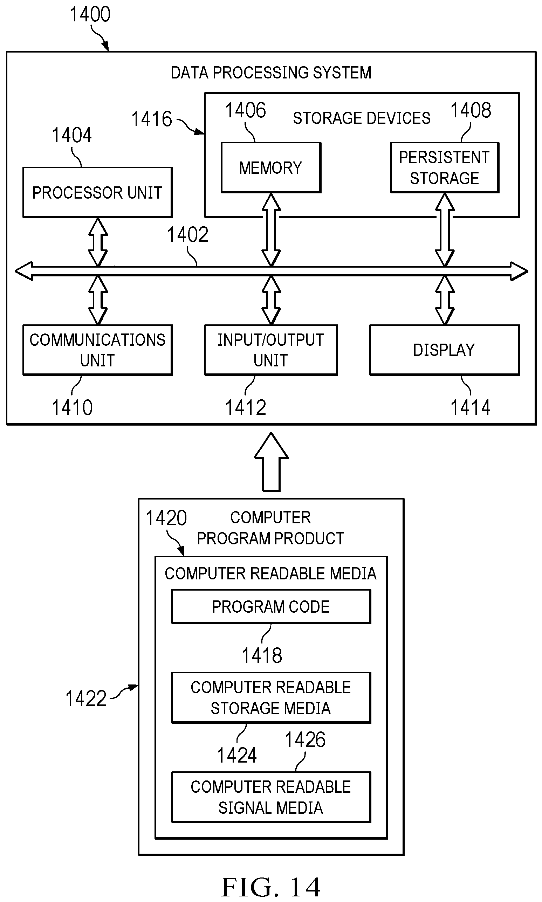

Turning now to **Figure 14****,** a block diagram of a data processing system is depicted in accordance with an illustrative embodiment. Data processing system **1400** can be used to implement computer system **244** in **Figure 2****.** In this illustrative example, data processing system **1400** includes communications framework **1402,** which provides communications between processor unit **1404,** memory **1406,** persistent storage **1408,** communications unit **1410,** input/output (I/O) unit **1412,** and display **1414.** In this example, communications framework **1402** takes the form of a bus system.

Processor unit **1404** serves to execute instructions for software that can be loaded into memory **1406.** Processor unit **1404** includes one or more processors. For example, processor unit **1404** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1404** can may be implemented using one or more heterogeneous processor systems in which a main processor is present with secondary processors on a single chip. As another illustrative example, processor unit **1404** can be a symmetric multi-processor system containing multiple processors of the same type on a single chip.

Memory **1406** and persistent storage **1408** are examples of storage devices **1416.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1416** may also be referred to as computer-readable storage devices in these illustrative examples. Memory **1406,** in these examples, can be, for example, a random-access memory or any other suitable volatile or non-volatile storage device. Persistent storage **1408** may take various forms, depending on the particular implementation.

For example, persistent storage **1408** may contain one or more components or devices. For example, persistent storage **1408** can be a hard drive, a solid-state drive (SSD), a flash memory, a rewritable optical disk, a rewritable magnetic tape, or some combination of the above. The media used by persistent storage **1408** also can be removable. For example, a removable hard drive can be used for persistent storage **1408.**

Communications unit **1410,** in these illustrative examples, provides for communications with other data processing systems or devices. In these illustrative examples, communications unit **1410** is a network interface card.

Input/output unit **1412** allows for input and output of data with other devices that can be connected to data processing system **1400.** For example, input/output unit **1412** may provide a connection for user input through at least one of a keyboard, a mouse, or some other suitable input device. Further, input/output unit **1412** may send output to a printer. Display **1414** provides a mechanism to display information to a user.

Instructions for at least one of the operating system, applications, or programs can be located in storage devices **1416,** which are in communication with processor unit **1404** through communications framework **1402.** The processes of the different embodiments can be performed by processor unit **1404** using computer-implemented instructions, which may be located in a memory, such as memory **1406.**

These instructions are referred to as program instructions, computer usable program instructions, or computer-readable program instructions that can be read and executed by a processor in processor unit **1404.** The program instructions in the different embodiments can be embodied on different physical or computer-readable storage media, such as memory **1406** or persistent storage **1408.**

Program instructions **1418** is located in a functional form on computer-readable media **1420** that is selectively removable and can be loaded onto or transferred to data processing system **1400** for execution by processor unit **1404.** Program instructions **1418** and computer-readable media **1420** form computer program product **1422** in these illustrative examples. In the illustrative example, computer-readable media **1420** is computer-readable storage media **1424.**

Computer-readable storage media **1424** is a physical or tangible storage device used to store program instructions **1418** rather than a medium that propagates or transmits program instructions **1418.** Computer readable storage media **1424,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program instructions **1418** can be transferred to data processing system **1400** using a computer-readable signal media. The computer-readable signal media are signals and can be, for example, a propagated data signal containing program instructions **1418.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1420"** can be singular or plural. For example, program instructions **1418** can be located in computer-readable media **1420** in the form of a single storage device or system. In another example, program instructions **1418** can be located in computer-readable media **1420** that is distributed in multiple data processing systems. In other words, some instructions in program instructions **1418** can be located in one data processing system while other instructions in program instructions **1418** can be located in one data processing system. For example, a portion of program instructions **1418** can be located in computer-readable media **1420** in a server computer while another portion of program instructions **1418** can be located in computer-readable media **1420** located in a set of client computers.

The different components illustrated for data processing system **1400** are not meant to provide architectural limitations to the manner in which different embodiments can be implemented. In some illustrative examples, one or more of the components may be incorporated in or otherwise form a portion of, another component. For example, memory **1406,** or portions thereof, may be incorporated in processor unit **1404** in some illustrative examples. The different illustrative embodiments can be implemented in a data processing system including components in addition to or in place of those illustrated for data processing system **1400.** Other components shown in **Figure 14** can be varied from the illustrative examples shown. The different embodiments can be implemented using any hardware device or system capable of running program instructions **1418.**

As used herein, the phrase "a number" means one or more. The phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category. As used herein, the term "substantially" or "approximately" when used with respect to measurements is determined by the ordinary artisan and is within acceptable engineering tolerances in the regulatory scheme for a given jurisdiction, such as but not limited to the Federal Aviation Administration Federal Aviation Regulations.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. The steps shown in the flowchart might occur in a different order than the specific sequence of blocks shown.

## Claims

1. A computer-implemented method of identifying an object (202) in an area of interest (208), wherein the object (202) is a physical object (210) selected from one of an aircraft (218), a ground vehicle (220), a surface ship (222), a submarine (224), a spacecraft (226), an animal (212), and a human person (214), and wherein the area of interest (208) is an airspace area of interest (228), whereby the airspace area of interest (208) is defined by determining, by a computer system (244), a reference point (322) relative to the airspace area of interest (208) and a reference direction (324) from the reference point (322), wherein the airspace area of interest (208) is enclosed by a boundary (232) comprising a plurality of line segments (236) extending between vertex points (234), whereby the computer system (244) defines each of the vertex points (234) by a received latitude and longitude (318), the method comprising:
determining, by the computer system (244), a vertex angle (328) of each vertex point (234) to provide a plurality of vertex angles (328), wherein the vertex angle (328) of a vertex point (234) is the angle between the reference direction (324) and a line extending from the reference point (322) to the vertex point (234);
determining, by the computer system (244), from location information (258) identifying a location (260) of the object (202), an object angle (336) of the object (202), wherein the object angle (336) of the object (202) is the angle between the reference direction (324) and a line extending from the reference point (322) to the object location (260);
using, by the computer system (244), the object angle (336) and the plurality of vertex angles (328) to identify a number of line segment crossings (338) in the plurality of line segments (236), wherein vertex points (234) at each end of a line segment (238) in the plurality of line segments (236) are adjacent vertex points (240), wherein using the object angle (336) and the plurality of vertex angles (328) to identify the number of line segment crossings (336) comprises:
identifying, by the computer system (244), a line segment (238) in the plurality of line segments (236) for which the object angle (336) of the physical object (210) is between the vertex angles (328) of the adjacent vertex points (240) at each end of the line segment (238) as a possible crossing line segment (238);
determining, by the computer system, whether the location (260) of the object (202) and the reference point (232) are on the same side of the possible crossing line segment (238); and
identifying, by the computer system (244), the possible crossing line segment as a line segment crossing (338) in response to a determination that the location (260) of the object (202) and the reference point (322) are on the same side of the possible crossing line segment (238);
wherein a line segment crossing in the number of line segment crossings (338) comprises a line segment (238) in the plurality of line segments (236) wherein a line starting at the location (260) of the physical object (210) and extending away from the reference point (322) in the direction from the reference point (322) to the location (260) of the physical object (210) crosses the boundary (232) of the area of interest (208); and
generating, by the computer system (244), an indicator (264) to indicate whether the object (202) is in the area of interest (208) based on the number of line segment crossings (338).

2. The method of claim **1,** wherein the reference point (322) is a center point (326) in the area of interest (208).

3. The method of claim 1 further comprising:
identifying, by the computer system (244), a line segment (238) in the plurality of line segments (236) for which the object angle (336) of the object (202) plus 180 degrees is between the vertex angles (328) of the adjacent vertex points (240) at each end of the line segment (238) as another possible crossing line segment (238);
determining, by the computer system (244), whether the location (260) of the object (202) and the reference point (322) are on the same side of the other possible crossing line segment (238); and
identifying, by the computer system (244), the other possible crossing line segment (238) as a line segment crossing (338) in response to a determination that the location (260) of the object (202) and the reference point (32) are on the same side of the other possible crossing line segment (238).

4. The method of claim 1 further comprising:
storing, by the computer system (244), the plurality of vertex angles (328) for the vertex points (234) in a binary search tree (330); and
searching, by the computer system (244), the binary search tree (330) to identify the line segment (238) in the plurality of line segments (236) for which the object angle (336) of the object (202) is between the vertex angles (328) of the adjacent vertex points (240) at each end of the line segment (238) as the possible crossing line segment (238).

5. The method of claim 1, wherein generating the indicator (264) to indicate whether the object (202) is in the area of interest (208) comprises:
displaying, by the computer system (244), a map (314) of an area including the area of interest (208); and
displaying, by the computer system (244), the indicator (264) to indicate the location (260) of the object (202) on the map (314) and whether the object (202) is in the area of interest (208).

6. The method of claim 1, wherein the indicator (264) is selected from one of a graphical indicator, a message, and an audio indicator.

7. The method of claim 1, wherein vertex points (234) at each end of a line segment (238) in the plurality of line segments (236) are adjacent vertex points (240); and further comprising:
storing, by the computer system (244), the plurality of vertex angles (328) for the vertex points (234) in a binary search tree (330); and
receiving, by the computer system (244), location information (258) identifying a location (260) of the object (202).

8. The method of claim 7, wherein storing the plurality of vertex angles (328) for the vertex points (234) in a binary search tree (330) comprises:
storing, by the computer system (244), vertex angles (328) for the vertex points (234) in a binary search tree (330) until the range of the binary search tree (330) is greater than or equal to 360 degrees; and
repeating, by the computer system (244), the step of storing vertex angles (328) for the vertex points (234) in a binary search tree (330) until the plurality of vertex angles (328) for all of the vertex points (234) are stored in binary search trees (330) forming a sequence of binary search trees (330).

9. The method of claim 7, wherein using the object angle (336) and the plurality of vertex angles (328) stored in the binary search tree (330) to identify the number of line segment crossings (338) in the plurality of line segments (236) comprises:
searching, by the computer system (244), the binary search tree (330) to identify possible crossing line segments in the plurality of line segments (236) for which the object angle (336) of the object (202) is between the vertex angles (328) of the adjacent vertex points (240) at each end of the line segments (236);
for each of the possible crossing line segments, determining, by the computer system (244), whether the location (260) of the object (202) and the reference point (322) are on the same side of the possible crossing line segment; and
for each of the possible crossing line segments, identifying, by the computer system (244), the possible crossing line segment as a line segment crossing (338) in response to a determination that the location (260) of the object (202) and the reference point (322) are on the same side of the possible crossing line segment.

10. An object locating system (300) for identifying an object (202) in an area of interest (208), wherein the object (202) is a physical object (210) selected from one of an aircraft (218), a ground vehicle (220), a surface ship (222), a submarine (224), a spacecraft (226), an animal (212) and a human person (214), and wherein the area of interest (208) is an airspace area of interest (228) defined by vertex points (234), whereby a computer system (244) defines each of the vertex points (234) by a received latitude and longitude (318), the object locating system (300)comprising:
the computer system (244);
an area of interest processor (306) located in the computer system (244), wherein the area of interest processor (306) is configured to:
determine a reference point (322) relative to the area of interest (208) and a reference direction (324) from the reference point (322), wherein the area of interest (208) is enclosed by a boundary (232) comprising a plurality of line segments (236) extending between vertex points (234), and
determine a vertex angle (328) of each vertex point (234) to provide a plurality of vertex angles (328), wherein the vertex angle (328) of a vertex point (234) is the angle between the reference direction (324) and a line extending from the reference point (322) to the vertex point (234); and an object location processor (310) located in the computer system (244), wherein the object location processor (310) is configured to:
determine, from location information (258) identifying a location (260) of the object (202), an object angle (336) of the object (202), wherein the object angle (336) of the object (202) is the angle between the reference direction (324) and a line extending from the reference point (322) to the object location (260),
use the object angle (336) and the plurality of vertex angles (328) to identify a number of line segment crossings (338) in the plurality of line segments (236),
wherein vertex points (234) at each end of a line segment (238) in the plurality of line segments (236) are adjacent vertex points (240), wherein the use of the object angle (336) and the plurality of vertex angles (328) to identify the number of line segment crossings (336) comprises:
identifying, by the computer system (244), a line segment (238) in the plurality of line segments (236) for which che object angle (336) of the physical object (210)is between the vertex angles (328) of the adjacent vertex points (240) at each end of the line segment (238) as a possible crossing line segment (238);
determining, by the computer system (244), whether the location (260) of the object (202) and the reference point (232) are on the same side of the possible crossing line segment (238); and
identifying, by the computer system (244), the possible crossing line segment as a line segment crossing (338) in response to a determination that the location (260) of the object (202) and the reference point (322) are on the same side of the possible crossing line segment (238);
wherein a line segment crossing in the number of line segment crossings (338) comprises a line segment (238) in the plurality of line segments (236) wherein a line starting at the location (260) of the physical object (210) and extending away from the reference point (322) in the direction from the reference point (322) to the location (260) of the physical object (210) crosses the boundary (232) of the area of interest (208); and
generate an indicator (264) to indicate whether the object (202) is in the area of interest (208) based on the number of line segment crossings (338).

11. The object locating system of claim 10, wherein the area of interest is an airspace area of interest and wherein the area of interest processor is configured to receive a latitude and longitude derining each of the vertex points.

12. The object locating system of claim 10, wherein the area of interest processor is configured to determine the reference point as a center point in the area of interest.

13. The object locating system of claim 10, wherein vertex points at each end of a line segment in the plurality of line segments are adjacent vertex points, and wherein the object location processor is configured to:
identify a line segment in the plurality of line segments for which the object angle of the object is between the vertex angles of the adjacent vertex points at each end of the line segment as a possible crossing line segment;
determine whether the location of the object and the reference point are on the same side of the possible crossing line segment; and
identify the possible crossing line segment as a line segment crossing in response to a determination that the location of the object and the reference point are on the same side of the possible crossing line segment.

14. The object locating system of claim 13, wherein:
the area of interest processor is configured to store the plurality of vertex angles for the vertex points in a binary search tree; and
the object location processor is configured to search the binary search tree to identify the line segment in the plurality of line segments for which the object angle of the physical object is between the vertex angles of the adjacent vertex points at each end of the line segment as the possible crossing line segment.

15. The object locating system of claim 14, wherein the indicator is selected from on of a graphical indicator, a message, and an audio indicator.

## Patentansprüche

1. Computerimplementiertes Verfahren zum Identifizieren eines Objekts (202) in einem Bereich von Interesse (208), wobei das Objekt (202) ein physisches Objekt (210) ist, das ausgewählt ist aus einem Flugzeug (218), einem Bodenfahrzeug (220), einem Überwasserschiff (222), einem U-Boot (224), einem Raumfahrzeug (226), einem Tier (212) oder einer menschlichen Person (214), und wobei der Bereich von Interesse (208) ein Luftraumbereich von Interesse (228) ist, wobei der Luftraumbereich von Interesse (208) bestimmt wird durch ein Bestimmen, durch ein Computersystem (244), eines Referenzpunktes (322) relativ zum Luftraumbereich von Interesse (208) und einer Referenzrichtung (324) von dem Referenzpunkt (322) aus, wobei der Luftraumbereich von Interesse (208) von einer Begrenzung (232) umschlossen ist, die eine Vielzahl von Liniensegmenten (236) aufweist, die sich zwischen Scheitelpunkten (234) erstrecken, wobei das Computersystem (244) jeden der Scheitelpunkte (234) durch eine empfangene Breite und Länge (318) definiert, wobei das Verfahren aufweist:
Bestimmen, durch das Computersystem (244), eines Scheitelwinkels (328) von jedem Scheitelpunkt (234), um eine Vielzahl von Scheitelwinkeln (328) vorzusehen, wobei der Scheitelwinkel (328) eines Scheitelpunkts (234) einen Winkel zwischen der Referenzrichtung (324) und einer Linie ist, die sich von dem Referenzpunkt (322) zum Scheitelpunkt (234) erstreckt;
Bestimmen, durch das Computersystem (244), aus einer Ortsinformation (258), die einen Ort (260) des Objekts (202) identifiziert, eines Objektwinkels (336) des Objekts (202), wobei der Objektwinkel (336) des Objekts (202) ein Winkel zwischen der Referenzrichtung (324) und einer Linie ist, die sich von dem Referenzpunkt (322) zu dem Objektort (260) erstreckt;
Verwenden, durch das Computersystem (244), des Objektwinkels (336) und der Vielzahl von Scheitelwinkeln (328), um eine Anzahl von Liniensegmentkreuzungen (338) in der Vielzahl von Liniensegmenten (236) zu identifizieren, wobei Scheitelpunkte (234) an jedem Ende eines Liniensegments (238) in der Vielzahl von Liniensegmenten (236) benachbarte Scheitelpunkte (240) sind, wobei ein Verwenden des Objektwinkels (336) und der Vielzahl von Scheitelwinkeln (328) zum Identifizieren der Anzahl von Liniensegmentkreuzungen (336) aufweist:
Identifizieren, durch das Computersystem (244), eines Liniensegments (238) in der Vielzahl von Liniensegmenten (236), für das der Objektwinkel (336) des physischen Objekts (210) zwischen den Scheitelwinkeln (328) der benachbarten Scheitelpunkte (240) an jedem Ende des Liniensegments (238) liegt, als ein mögliches Kreuzungsliniensegment (238);
Bestimmen, durch das Computersystem, ob der Ort (260) des Objekts (202) und der Referenzpunkt (232) auf der gleichen Seite des möglichen Kreuzungsliniensegments (238) liegen; und
Identifizieren, durch das Computersystem (244), des möglichen Kreuzungsliniensegments als Liniensegmentkreuzung (338) in Reaktion auf eine Bestimmung, dass der Ort (260) des Objekts (202) und der Referenzpunkt (322) auf der gleichen Seite des möglichen Kreuzungsliniensegments (238) liegen;
wobei eine Liniensegmentkreuzung in der Anzahl von Liniensegmentkreuzungen (338) ein Liniensegment (238) in der Vielzahl von Liniensegmenten (236) aufweist, wobei eine Linie, die am Ort (260) des physischen Objekts (210) beginnt und die sich von dem Referenzpunkt (322) in der Richtung von dem Referenzpunkt (322) zu dem Ort (260) des physischen Objekts (210) weg erstreckt, die Begrenzung (232) des Bereichs von Interesse (208) kreuzt; und
Erzeugen, durch das Computersystem (244), eines Indikators (264) zum Angeben, ob das Objekt (202) im Bereich von Interesse (208) liegt, basierend auf der Anzahl von Liniensegmentkreuzungen (338).

2. Verfahren nach Anspruch 1, wobei der Referenzpunkt (322) ein Mittelpunkt (326) des Bereichs von Interesse (208) ist.

3. Verfahren nach Anspruch 1, das ferner aufweist:
Identifizieren, durch das Computersystem (244), eines Liniensegments (238) in der Vielzahl von Liniensegmenten (236), für das der Objektwinkel (336) des Objekts (202) plus 180° zwischen den Scheitelwinkeln (328) der benachbarten Scheitelpunkte (240) an jedem Ende des Liniensegments (238) liegt, als ein anderes mögliches Kreuzungsliniensegment (238);
Bestimmen, durch das Computersystem (244), ob der Ort (260) des Objekts (202) und der Referenzpunkt (322) auf der gleichen Seite des anderen möglichen Kreuzungsliniensegments (238) liegen; und
Identifizieren, durch das Computersystem (244), des anderen möglichen Kreuzungsliniensegments (238) als eine Liniensegmentkreuzung (338) in Reaktion auf eine Bestimmung, dass der Ort (260) des Objekts (202) und der Referenzpunkt (32) auf der gleichen Seite des anderen möglichen Kreuzungsliniensegments (238) liegen.

4. Verfahren nach Anspruch 1, das ferner aufweist:
Speichern, durch das Computersystem (244), der Vielzahl von Scheitelwinkeln (328) für die Scheitelpunkte (234) in einem binären Suchbaum (330); und
Durchsuchen, durch das Computersystem (244), des binären Suchbaums (330) zum Identifizieren des Liniensegments (238) in der Vielzahl von Liniensegmenten (236), für das der Objektwinkel (336) des Objekts (202) zwischen den Scheitelwinkeln (328) der benachbarten Scheitelpunkte (240) an jedem Ende des Liniensegments (238) liegt, als das mögliche Kreuzungsliniensegment (238).

5. Verfahren nach Anspruch 1, wobei ein Erzeugen des Indikators (264) zum Angeben, ob das Objekt (202) im Bereich von Interesse (208) liegt, aufweist:
Anzeigen, durch das Computersystem (244), einer Karte (314) eines Bereichs einschließlich des Bereichs von Interesse (208); und
Anzeigen, durch das Computersystem (244), des Indikators (264) zum Angeben des Orts (260) des Objekts (202) auf der Karte (314) und ob das Objekt (202) in dem Bereich von Interesse (208) liegt.

6. Verfahren nach Anspruch 1, wobei der Indikator (264) aus einem grafischen Indikator, einer Nachricht, oder einem Audioindikator ausgewählt wird.

7. Verfahren nach Anspruch 1, wobei Scheitelpunkte (234) an jedem Ende eines Liniensegments (238) in der Vielzahl von Liniensegmenten (236) benachbarte Scheitelpunkte (240) sind; und das ferner aufweist:
Speichern, durch das Computersystem (244), der Vielzahl von Scheitelwinkeln (328) für die Scheitelpunkte (234) in einem binären Suchbaum (330); und
Empfangen, durch das Computersystem (244), einer Ortsinformation (258), die einen Ort (260) des Objekts (202) identifiziert.

8. Verfahren nach Anspruch 7, wobei ein Speichern der Vielzahl von Scheitelwinkeln (328) für die Scheitelpunkte (234) in einem binären Suchbaum (330) aufweist:
Speichern, durch das Computersystem (244), von Scheitelwinkeln (328) für die Scheitelpunkte (234) in einem binären Suchbaum (330), bis der Bereich des binären Suchbaums (330) größer oder gleich 360° ist; und
Wiederholen, durch das Computersystem (244), des Schritts eines Speicherns von Scheitelwinkeln (328) für die Scheitelpunkte (234) in einem binären Suchbaum (330), bis die Vielzahl von Scheitelwinkeln (328) für alle Scheitelpunkte (234) in binären Suchbäumen (330) gespeichert sind, die eine Sequenz von binären Suchbäumen (330) bilden.

9. Verfahren nach Anspruch 7, wobei ein Verwenden des Objektwinkels (336) und der Vielzahl von Scheitelwinkeln (328), die in dem binären Suchbaum (330) gespeichert sind, um die Anzahl von Liniensegmentkreuzungen (338) in der Vielzahl von Liniensegmenten (236) zu identifizieren, aufweist:
Durchsuchen, durch das Computersystem (244), des binären Suchbaums (330) zum Identifizieren möglicher Kreuzungsliniensegmente in der Vielzahl von Liniensegmenten (236), für die der Objektwinkel (336) des Objekts (202) zwischen den Scheitelwinkeln (328) der benachbarten Scheitelpunkte (240) an jedem Ende der Liniensegmente (236) liegt;
für jedes der möglichen Kreuzungsliniensegmente Bestimmen, durch das Computersystem (244), ob der Ort (260) des Objekts (202) und der Referenzpunkt (322) auf der gleichen Seite des möglichen Kreuzungsliniensegments liegen; und
für jedes der möglichen Kreuzungsliniensegmente Identifizieren, durch das Computersystem (244), des möglichen Kreuzungsliniensegments als eine Liniensegmentkreuzung (338) in Reaktion auf eine Bestimmung, dass der Ort (260) des Objekts (202) und der Referenzpunkt (322) auf der gleichen Seite des möglichen Kreuzungsliniensegments liegen.

10. Objektortungssystem (300) zum Identifizieren eines Objekts (202) in einem Bereich von Interesse (208), wobei das Objekt (202) ein physisches Objekt (210) ist, das ausgewählt ist aus einem Flugzeug (218), einem Bodenfahrzeug (220), einem Überwasserschiff (222), einem U-Boot (224), einem Raumfahrzeug (226), einem Tier (212) oder einer menschlichen Person (214), und wobei der Bereich von Interesse (208) ein Luftraumbereich von Interesse (228) ist, der durch Scheitelpunkte (234) definiert ist, wobei ein Computersystem (244) jeden der Scheitelpunkte (234) durch eine empfangene Breite und Länge (318) definiert, wobei das Objektortungssystem (300) aufweist:
das Computersystem (244);
einen Prozessor (306) für einen Bereich von Interesse, der in dem Computersystem (244) lokalisiert ist, wobei der Prozessor (306) für einen Bereich von Interesse eingerichtet ist:
einen Referenzpunkt (322) relativ zum Bereich von Interesse (208) und eine Referenzrichtung (324) von dem Referenzpunkt (322) aus zu bestimmen, wobei der Bereich von Interesse (208) von einer Begrenzung (232) umschlossen ist, die eine Vielzahl von Liniensegmenten (236) aufweist, die sich zwischen Scheitelpunkten (234) erstrecken, und
einen Scheitelwinkel (328) für jeden Scheitelpunkt (234) zu bestimmen, um eine Vielzahl von Scheitelwinkeln (328) vorzusehen, wobei der Scheitelwinkel (328) eines Scheitelpunkts (234) ein Winkel zwischen der Referenzrichtung (324) und einer Linie ist, die sich von dem Referenzpunkt (322) zum Scheitelpunkt (234) erstreckt; und
einen Objektortungsprozessor (310), der in dem Computersystem (244) lokalisiert ist, wobei der Objektortungsprozessor (310) eingerichtet ist:
aus einer Ortsinformation (258), die einen Ort (260) des Objekts (202) identifiziert, einen Objektwinkel (336) des Objekts (202) zu bestimmen, wobei der Objektwinkel (336) des Objekts (202) ein Winkel zwischen der Referenzrichtung (324) und einer Linie ist, die sich von dem Referenzpunkt (322) zum Objektort (260) erstreckt,
den Objektwinkel (336) und die Vielzahl von Scheitelwinkeln (328) zu verwenden, um eine Anzahl von Liniensegmentkreuzungen (338) in der Vielzahl von Liniensegmenten (236) zu identifizieren,
wobei Scheitelpunkte (234) an jedem Ende eines Liniensegments (238) in der Vielzahl von Liniensegmenten (236) benachbarte Scheitelpunkte (240) sind, wobei die Verwendung des Objektwinkels (336) und der Vielzahl von Scheitelwinkeln (328) zum Identifizieren der Anzahl von Liniensegmentkreuzungen (336) aufweist:
Identifizieren, durch das Computersystem (244), eines Liniensegments (238) in der Vielzahl von Liniensegmenten (236), für das der Objektwinkel (336) des physischen Objekts (210) zwischen den Scheitelwinkeln (328) der benachbarten Scheitelpunkte (240) an jedem Ende des Liniensegments (238) liegt, als mögliches Kreuzungsliniensegment (238);
Bestimmen, durch das Computersystem (244), ob der Ort (260) des Objekts (202) und der Referenzpunkt (232) auf der gleichen Seite des möglichen Kreuzungsliniensegments (238) liegen; und
Identifizieren, durch das Computersystem (244), des möglichen Kreuzungsliniensegments als eine Liniensegmentkreuzung (338) in Reaktion auf eine Bestimmung, dass der Ort (260) des Objekts (202) und der Referenzpunkt (322) auf der gleichen Seite des möglichen Kreuzungsliniensegments (238) liegen;
wobei eine Liniensegmentkreuzung in der Anzahl von Liniensegmentkreuzungen (338) ein Liniensegment (238) in der Vielzahl von Liniensegmenten (236) aufweist, wobei eine Linie, die an dem Ort (260) des physischen Objekts (210) beginnt und die sich von dem Referenzpunkt (322) in der Richtung von dem Referenzpunkt (322) zu dem Ort (260) des physischen Objekts (210) weg erstreckt, die Begrenzung (232) des Bereichs von Interesse (208) kreuzt; und
Erzeugen eines Indikators (264) zum Angeben, ob das Objekt (202) in dem Bereich von Interesse (208) liegt, basierend auf der Anzahl von Liniensegmentkreuzungen (338).

11. Objektortungssystem nach Anspruch 10, wobei der Bereich von Interesse ein Luftraumbereich von Interesse ist und wobei der Prozessor für einen Bereich von Interesse eingerichtet ist, eine Breite und Länge zu empfangen, die jeden der Scheitelpunkte definieren.

12. Objektortungssystem nach Anspruch 10, wobei der Prozessor für einen Bereich von Interesse eingerichtet ist, den Referenzpunkt als einen Mittelpunkt im Bereich von Interesse zu bestimmen.

13. Objektortungssystem nach Anspruch 10, wobei die Scheitelpunkte an jedem Ende eines Liniensegments in der Vielzahl von Liniensegmenten benachbarte Scheitelpunkte sind, und wobei der Objektortungsprozessor eingerichtet ist:
ein Liniensegment in der Vielzahl von Liniensegmenten, für das der Objektwinkel des Objekts zwischen den Scheitelwinkeln der benachbarten Scheitelpunkte an jedem Ende des Liniensegments liegt, als ein mögliches Kreuzungsliniensegment zu identifizieren;
zu bestimmen, ob der Ort des Objekts und der Referenzpunkt auf der gleichen Seite des möglichen Kreuzungsliniensegments liegen; und
das mögliche Kreuzungsliniensegments als eine Liniensegmentkreuzung in Reaktion auf eine Bestimmung zu identifizieren, dass der Ort des Objekts und der Referenzpunkt auf der gleichen Seite des möglichen Kreuzungsliniensegments liegen.

14. Objektortungssystem nach Anspruch 13, wobei:
der Prozessor für einen Bereich von Interesse eingerichtet ist, die Vielzahl von Scheitelwinkeln für die Scheitelpunkte in einem binären Suchbaum zu speichern; und
der Objektortungsprozessor eingerichtet ist, den binären Suchbaum zu durchsuchen, um das Liniensegment in der Vielzahl von Liniensegmenten, für das der Objektwinkel des physischen Objekts zwischen den Scheitelwinkeln der benachbarten Scheitelpunkte an jedem Ende des Liniensegments liegt, als das mögliche Kreuzungsliniensegment zu identifizieren.

15. Objektortungssystem nach Anspruch 14, wobei der Indikator aus einem grafischen Indikator, einer Nachricht, oder einem Audioindikator ausgewählt ist.

## Revendications

1. Procédé, mis en œuvre par ordinateur, d'identification d'un objet (202) dans une zone d'intérêt (208), dans lequel l'objet (202) est un objet physique (210) choisi parmi un aéronef (218), un véhicule terrestre (220), un navire de surface (222), un sous-marin (224), un engin spatial (226), un animal (212) et un être humain (214), et dans lequel la zone d'intérêt (208) est une zone d'intérêt d'espace aérien (228), par lequel la zone d'intérêt d'espace aérien (208) est définie en déterminant, à l'aide d'un système informatique (244), un point de référence (322) par rapport à la zone d'intérêt d'espace aérien (208) et une direction de référence (324) à partir du point de référence (322), dans lequel la zone d'intérêt d'espace aérien (208) est délimitée par une frontière (232) comprenant une pluralité de segments de ligne (236) s'étendant entre des points de sommet (234), par lequel le système informatique (244) définit chacun des points de sommet (234) par une latitude et une longitude reçues (318), le procédé comprenant le fait de :
déterminer, par le système informatique (244), un angle de sommet (328) de chaque point de sommet (234) afin de fournir une pluralité d'angles de sommet (328), dans lequel l'angle de sommet (328) d'un point de sommet (234) est l'angle entre la direction de référence (324) et une ligne s'étendant du point de référence (322) au point de sommet (234) ;
déterminer, par le système informatique (244), à partir d'informations de localisation (258) identifiant un emplacement (260) de l'objet (202), un angle d'objet (336) de l'objet (202), dans lequel l'angle d'objet (336) de l'objet (202) est l'angle entre la direction de référence (324) et une ligne s'étendant du point de référence (322) à l'emplacement d'objet (260) ;
utiliser, par le système informatique (244), l'angle d'objet (336) et la pluralité d'angles de sommet (328) pour identifier un nombre de croisements de segments de ligne (338) dans la pluralité de segments de ligne (236), dans lequel les points de sommet (234) à chaque extrémité d'un segment de ligne (238) dans la pluralité de segments de ligne (236) sont des points de sommet adjacents (240), dans lequel l'utilisation de l'angle d'objet (336) et de la pluralité d'angles de sommet (328) pour identifier le nombre de croisements de segments de ligne (336) comprend le fait de :
identifier, par le système informatique (244), un segment de ligne (238) dans la pluralité de segments de ligne (236) pour lequel l'angle d'objet (336) de l'objet physique (210) se situe entre les angles de sommet (328) des points de sommet adjacents (240) à chaque extrémité du segment de ligne (238), comme étant un segment de ligne de croisement possible (238) ;
déterminer, par le système informatique, si l'emplacement (260) de l'objet (202) et le point de référence (232) se trouvent du même côté du segment de ligne de croisement possible (238) ; et
identifier, par le système informatique (244), le segment de ligne de croisement possible comme étant un croisement de segments de ligne (338), en réponse à une détermination selon laquelle l'emplacement (260) de l'objet (202) et le point de référence (322) se trouvent du même côté du segment de ligne de croisement possible (238) ;
dans lequel un croisement de segments de ligne dans le nombre de croisements de segments de ligne (338) comprend un segment de ligne (238) dans la pluralité de segments de ligne (236), dans lequel une ligne commençant à l'emplacement (260) de l'objet physique (210) et s'étendant à partir du point de référence (322) dans la direction allant du point de référence (322) à l'emplacement (260) de l'objet physique (210) croise la frontière (232) de la zone d'intérêt (208) ; et
générer, par le système informatique (244), un indicateur (264) pour indiquer si l'objet (202) se trouve dans la zone d'intérêt (208) en fonction du nombre de croisements de segments de ligne (338).

2. Procédé selon la revendication 1, dans lequel le point de référence (322) est un point central (326) dans la zone d'intérêt (208).

3. Procédé selon la revendication **1,** comprenant en outre le fait de :
identifier, par le système informatique (244), un segment de ligne (238) dans la pluralité de segments de ligne (236) pour lequel l'angle d'objet (336) de l'objet (202) plus 180 degrés se situe entre les angles de sommet (328) des points de sommet adjacents (240) à chaque extrémité du segment de ligne (238) comme étant un autre segment de ligne de croisement possible (238) ;
déterminer, par le système informatique (244), si l'emplacement (260) de l'objet (202) et le point de référence (322) se trouvent du même côté de l'autre segment de ligne de croisement possible (238) ; et
identifier, par le système informatique (244), l'autre segment de ligne de croisement possible (238) comme étant un croisement de segments de ligne (338) en réponse à une détermination selon laquelle l'emplacement (260) de l'objet (202) et le point de référence (32) se trouvent du même côté de l'autre segment de ligne de croisement possible (238).

4. Procédé selon la revendication 1, comprenant en outre le fait de :
stocker, par le système informatique (244), la pluralité d'angles de sommet (328) pour les points de sommet (234) dans un arbre de recherche binaire (330) ; et
rechercher, par le système informatique (244), dans l'arbre de recherche binaire (330), pour identifier le segment de ligne (238) dans la pluralité de segments de ligne (236) pour lequel l'angle d'objet (336) de l'objet (202) se situe entre les angles de sommet (328) des points de sommet adjacents (240) à chaque extrémité du segment de ligne (238) comme étant le segment de ligne de croisement possible (238).

5. Procédé selon la revendication 1, dans lequel la génération de l'indicateur (264) pour indiquer si l'objet (202) se situe dans la zone d'intérêt (208) comprend le fait de :
afficher, par le système informatique (244), une carte (314) d'une zone comprenant la zone d'intérêt (208) ; et
afficher, par le système informatique (244), l'indicateur (264) pour indiquer l'emplacement (260) de l'objet (202) sur la carte (314) et si l'objet (202) se situe dans la zone d'intérêt (208).

6. Procédé selon la revendication 1, dans lequel l'indicateur (264) est choisi parmi un indicateur graphique, un message et un indicateur audio.

7. Procédé selon la revendication 1, dans lequel les points de sommet (234) à chaque extrémité d'un segment de ligne (238) dans la pluralité de segments de ligne (236) sont des points de sommet adjacents (240) ; et comprenant en outre le fait de :
stocker, par le système informatique (244), la pluralité d'angles de sommet (328) pour les points de sommet (234) dans un arbre de recherche binaire (330) ; et
recevoir, par le système informatique (244), des informations de localisation (258) identifiant un emplacement (260) de l'objet (202).

8. Procédé selon la revendication 7, dans lequel le stockage de la pluralité d'angles de sommet (328) pour les points de sommet (234) dans un arbre de recherche binaire (330) comprend le fait de :
stocker, par le système informatique (244), des angles de sommet (328) pour les points de sommet (234), dans un arbre de recherche binaire (330), jusqu'à ce que la plage de l'arbre de recherche binaire (330) soit supérieure ou égale à 360 degrés ; et
répéter, par le système informatique (244), l'étape de stockage des angles de sommet (328) pour les points de sommet (234) dans un arbre de recherche binaire (330) jusqu'à ce que la pluralité d'angles de sommet (328) pour tous les points de sommet (234) soient stockés dans des arbres de recherche binaires (330) formant une séquence d'arbres de recherche binaires (330).

9. Procédé selon la revendication 7, dans lequel l'utilisation de l'angle d'objet (336) et de la pluralité d'angles de sommet (328) stockés dans l'arbre de recherche binaire (330) pour identifier le nombre de croisements de segments de ligne (338) dans la pluralité de segments de ligne (236) comprend le fait de :
rechercher, par le système informatique (244), dans l'arbre de recherche binaire (330), afin d'identifier des segments de ligne de croisement possible dans la pluralité de segments de ligne (236) pour lesquels l'angle d'objet (336) de l'objet (202) se situe entre les angles de sommet (328) des points de sommet adjacents (240) à chaque extrémité des segments de ligne (236) ;
pour chacun des segments de ligne de croisement possible, déterminer, par le système informatique (244), si l'emplacement (260) de l'objet (202) et le point de référence (322) se trouvent du même côté du segment de ligne de croisement possible ; et
pour chacun des segments de ligne de croisement possible, identifier, par le système informatique (244), le segment de ligne de croisement possible comme étant un croisement de segments de ligne (338) en réponse à une détermination selon laquelle l'emplacement (260) de l'objet (202) et le point de référence (322) se trouvent du même côté du segment de ligne de croisement possible.

10. Système de localisation d'objet (300) permettant d'identifier un objet (202) dans une zone d'intérêt (208), dans lequel l'objet (202) est un objet physique (210) choisi parmi un aéronef (218), un véhicule terrestre (220), un navire de surface (222), un sous-marin (224), un engin spatial (226), un animal (212) et un être humain (214), et dans lequel la zone d'intérêt (208) est une zone d'intérêt d'espace aérien (228) définie par des points de sommet (234), par lequel un système informatique (244) définit chacun des points de sommet (234) par une latitude et une longitude reçues (318), le système de localisation d'objet (300) comprenant :
le système informatique (244) ;
un processeur de zone d'intérêt (306) situé dans le système informatique (244), dans lequel le processeur de zone d'intérêt (306) est configuré pour :
déterminer un point de référence (322) par rapport à la zone d'intérêt (208) et une direction de référence (324) à partir du point de référence (322), dans lequel la zone d'intérêt (208) est délimitée par une frontière (232) comprenant une pluralité de segments de ligne (236) s'étendant entre des points de sommet (234) ; et
déterminer un angle de sommet (328) de chaque point de sommet (234) afin de fournir une pluralité d'angles de sommet (328), dans lequel l'angle de sommet (328) d'un point de sommet (234) est l'angle entre la direction de référence (324) et une ligne s'étendant du point de référence (322) au point de sommet (234) ; et
un processeur de localisation d'objet (310) situé dans le système informatique (244), dans lequel le processeur de localisation d'objet (310) est configuré pour :
déterminer, à partir d'informations de localisation (258) identifiant un emplacement (260) de l'objet (202), un angle d'objet (336) de l'objet (202), dans lequel l'angle d'objet (336) de l'objet (202) est l'angle entre la direction de référence (324) et une ligne s'étendant du point de référence (322) à l'emplacement d'objet (260),
utiliser l'angle d'objet (336) et la pluralité d'angles de sommet (328) pour identifier un nombre de croisements de segments de ligne (338) dans la pluralité de segments de ligne (236),
dans lequel des points de sommet (234) à chaque extrémité d'un segment de ligne (238) dans la pluralité de segments de ligne (236) sont des points de sommet adjacents (240), dans lequel l'utilisation de l'angle d'objet (336) et de la pluralité d'angles de sommet (328) pour identifier le nombre de croisements de segments de ligne (336) comprend le fait de :
identifier, par le système informatique (244), un segment de ligne (238) dans la pluralité de segments de ligne (236) pour lequel l'angle d'objet (336) de l'objet physique (210) se situe entre les angles de sommet (328) des points de sommet adjacents (240) à chaque extrémité du segment de ligne (238) comme étant un segment de ligne de croisement possible (238) ;
déterminer, par le système informatique (244), si l'emplacement (260) de l'objet (202) et le point de référence (232) se trouvent du même côté du segment de ligne de croisement possible (238) ; et
identifier, par le système informatique (244), le segment de ligne de croisement possible comme étant un croisement de segments de ligne (338) en réponse à une détermination selon laquelle l'emplacement (260) de l'objet (202) et le point de référence (322) se trouvent du même côté du segment de ligne de croisement possible (238) ;
dans lequel un croisement de segments de ligne dans le nombre de croisements de segments de ligne (338) comprend un segment de ligne (238) dans la pluralité de segments de ligne (236), dans lequel une ligne commençant à l'emplacement (260) de l'objet physique (210) et s'étendant à partir du point de référence (322) dans la direction allant du point de référence (322) à l'emplacement (260) de l'objet physique (210) croise la frontière (232) de la zone d'intérêt (208) ; et
générer un indicateur (264) pour indiquer si l'objet (202) se situe dans la zone d'intérêt (208) en fonction du nombre de croisements de segments de ligne (338).

11. Système de localisation d'objet selon la revendication 10, dans lequel la zone d'intérêt est une zone d'intérêt d'espace aérien et dans lequel le processeur de zone d'intérêt est configuré pour recevoir une latitude et une longitude déterminant chacun des points de sommet.

12. Système de localisation d'objet selon la revendication 10, dans lequel le processeur de zone d'intérêt est configuré pour déterminer le point de référence comme étant un point central dans la zone d'intérêt.

13. Système de localisation d'objet selon la revendication 10, dans lequel des points de sommet à chaque extrémité d'un segment de ligne dans la pluralité de segments de ligne sont des points de sommet adjacents, et dans lequel le processeur de localisation d'objet est configuré pour :
identifier un segment de ligne dans la pluralité de segments de ligne pour lequel l'angle d'objet de l'objet se situe entre les angles de sommet des points de sommet adjacents à chaque extrémité du segment de ligne comme étant un segment de ligne de croisement possible ;
déterminer si l'emplacement de l'objet et le point de référence se trouvent du même côté du segment de ligne de croisement possible ; et
identifier le segment de ligne de croisement possible comme étant un croisement de segments de ligne en réponse à une détermination selon laquelle l'emplacement de l'objet et le point de référence se trouvent du même côté du segment de ligne de croisement possible.

14. Système de localisation d'objet selon la revendication 13, dans lequel :
le processeur de zone d'intérêt est configuré pour stocker la pluralité d'angles de sommet pour les points de sommet dans un arbre de recherche binaire ; et
le processeur de localisation d'objet est configuré pour rechercher dans l'arbre de recherche binaire afin d'identifier le segment de ligne dans la pluralité de segments de ligne pour lequel l'angle d'objet de l'objet physique se situe entre les angles de sommet des points de sommet adjacents à chaque extrémité du segment de ligne, comme étant le segment de ligne de croisement possible.

15. Système de localisation d'objet selon la revendication 14, dans lequel l'indicateur est choisi parmi un indicateur graphique, un message et un indicateur audio.
